(19) Europäisches Patentamt
European Patent Office
Office européen des brevets

(11) Veröffentlichungsnummer: **0 649 866 A1**

(12) **EUROPÄISCHE PATENTANMELDUNG**

(21) Anmeldenummer: **94115854.5**

(51) Int. Cl.[6]: **C08G 18/79**, C08G 18/78

(22) Anmeldetag: **07.10.94**

(30) Priorität: **20.10.93 DE 4335796**

(43) Veröffentlichungstag der Anmeldung:
**26.04.95 Patentblatt 95/17**

(84) Benannte Vertragsstaaten:
**AT BE CH DE ES FR GB IT LI NL SE**

(71) Anmelder: **BAYER AG**

**D-51368 Leverkusen (DE)**

(72) Erfinder: **Mertes, Harald, Dr.**
**Neusser Strasse 108**
**D-50670 Köln (DE)**
Erfinder: **Halpaap, Reinhard, Dr.**
**In der Hildscheid 6**
**D-51519 Odenthal (DE)**
Erfinder: **Pedain, Josef, Dr.**
**Haferkamp 6**
**D-51061 Köln (DE)**
Erfinder: **Sonntag, Michael, Dr.**
**Gartenstrasse 27a**
**D-51519 Odenthal (DE)**

(54) **Lackpolyisocyanate und ihre Verwendung.**

(57) Durch Trimerisierung eines Teils der Isocyanatgruppen von cycloaliphatischen Diisocyanaten oder von Gemischen aus cycloaliphatischen Diisocyanaten und aliphatischen Diisocyanaten unter vorhergehender, gleichzeitiger und/oder anschließender Umsetzung eines weiteren Teils der Isocyanatgruppen mit einem $C_1$-$C_5$-Alkanol unter Allophanatbildung erhaltene Lackpolyisocyanate mit einem NCO-Gehalt von 8 bis 20 Gew.-%, einer mittleren NCO-Funktionalität von unter 3, einem Gehalt an Isocyanuratgruppen von 3,5 bis 24 Gew.-%, einem Gehalt an Allophanatgruppen von 2,5 bis 23 Gew.-% und einem Gehalt an monomeren Diisocyanaten von weniger als 2 Gew.-% und die Verwendung der Lackpolyisocyanate, gegebenenfalls in blockierter Form, als Isocyanatkomponente in Ein- oder Zweikomponenten-Beschichtungssystemen, insbesondere Zweikomponenten-Polyurethanlacken.

EP 0 649 866 A1

Die Erfindung betrifft neue Isocyanurat- und Allophanatgruppen aufweisende Lackpolyisocyanate, die bei 23 °C Festkörper darstellen oder eine Viskosität von mehr als 100 Pa.s aufweisen und ihre Verwendung, gegebenenfalls in blockierter Form, in Ein- oder Zweikomponenten-Beschichtungssystemen, insbesondere in Zweikomponenten-Polyurethanlacken.

Isocyanurat- und Allophanatgruppen aufweisende Polyisocyanate werden beispielsweise bereits in EP-A-0 496 208, EP-A-0 524 500, EP-A-0 524 501, EP-A-0 535 483 oder JP-A-043 06 218 beschrieben. In den genannten europäischen Anmeldungen werden Polyisocyanate mit Viskositäten von weniger als 10 000 mPa.s auf Basis von aliphatischen Diisocyanaten und von Monoalkoholen unterschiedlicher Kettenlängen beansprucht. Wie den Beispielen dieser Anmeldungen zu entnehmen ist, handelt es sich bei den beschriebenen Produkten mit Viskositäten bei Raumtemperatur unterhalb 10 000 mPa.s ausnahmslos um Polyisocyanate auf Basis von 1,6-Diisocyanatohexan (HDI). Die beschriebenen Polyisocyanate zeichnen sich durch eine gegenüber Trimerisaten beispielsweise gemäß EP-B-00 10 589, EP-B-00 57 653, EP-B-0 330 966, DE-OS 1 667 309 und DE-OS 2 452 532 verringerte Viskosität sowie eine im Gegensatz zu niedrigviskosen Trimerisaten beispielsweise gemäß DE-OS 3 810 908 verbesserte Kompatibilität zu hochverzweigten Polyesterharzen aus, genügen jedoch nicht in allen Anwendungsgebieten den Anforderungen der Praxis. Die mit der Verringerung der Viskosität einhergehende Verringerung der NCO-Funktionalität von Polyisocyanaten gemäß EP-A-0 496 208 im Vergleich zu analogen Allophanatgruppen-freien HDI-Trimerisaten führt oftmals, wie in nachstehenden Vergleichsbeispielen nachgewiesen, zu einer Verschlechterung der Eigenschaften der Beschichtungssysteme bzw. der aus diesen Beschichtungssystemen hergestellten Lackfilme, insbesondere hinsichtlich des Trocknungsverhaltens, der Filmhärte und der Benzinfestigkeit.

In vielen Anwendungsbereichen für hochwertige Beschichtungssysteme ist die Verwendung bzw. die Mitverwendung von Polyisocyanaten auf Basis cycloaliphatischer Diisocyanate erwünscht, um Beschichtungen herzustellen, die gegenüber solchen auf Basis rein linearaliphatischer Polyisocyanate verbesserte Härte, Lösungsmittelbeständigkeit und Vergilbungsstabilität zeigen. Polyisocyanate, die durch Trimerisierung cycloaliphatischer Diisocyanate erhalten werden, wie sie beispielsweise in der EP-B-000 3 765 und der EP-B-00 17 998 beschrieben werden, besitzen jedoch deutlich höhere Viskositäten als entsprechende Trimerisate auf Basis HDI und fallen im allgemeinen bei Raumtemperatur als Festharze an. Wie in EP-B-00 47 452 erwähnt wird, besitzen derartige Produkte selbst nach Aufnahme in Lösungsmitteln vergleichsweise hohe Viskositäten, so daß die Verwendbarkeit in lösemittelarmen Bindemittelsystemen erheblich eingeschränkt wird.

In Zuge sich verschärfender umweltpolitischer Rahmenbedingungen ist es jedoch erforderlich, die Lösungsmittelgehalte von Beschichtungssystemen zu reduzieren, d.h. den Festkörperanteil der Systeme zu erhöhen. Diese Festkörpererhöhung ist bei durch die Applikationsbedingungen vorgegebener Verarbeitungsviskosität des Beschichtungssystems durch Viskositätserniedrigung der Komponenten des Systems, also beispielsweise der Polyisocyanatkomponente zu erzielen.

Es war daher die der Erfindung zugrundeliegende Aufgabe, neue Lackpolyisocyanate zur Verfügung zu stellen, die einerseits die sehr guten lacktechnischen Eigenschaften von Lackpolyisocyanaten auf Basis von cycloaliphatischen Diisocyanaten in sich vereinen, ohne gleichzeitig den Nachteil einer zu hohen Viskosität ihrer Lösungen in Lacklösungsmitteln aufzuweisen.

Überraschenderweise konnte diese Aufgabe mit der Bereitstellung der nachstehend näher beschriebenen erfindungsgemäßen Lackpolyisocyanate gelöst werden. Obwohl es sich bei diesen Lackpolyisocyanaten um Verbindungen handelt, die bei 23 °C Festkörper darstellen oder eine über 100 Pa.s liegende Viskosität aufweisen, sind sie zur Herstellung von Polyisocyanat-Lösungen in üblichen Lacklösungsmitteln geeignet, die bei gleichem Festkörpergehalt eine deutlich niedrigere Viskosität aufweisen als analoge Lösungen von analogen, jedoch Allophanatgruppen-freien Lackpolyisocyanaten. Diese Viskositätserniedrigung im Vergleich zu analogen Lösungen von Allophanatgruppen-freien Trimerisaten ist jedoch auch hier mit einer Verringerung der Funktionalität der Polyisocyanate verbunden. Es muß deshalb als ausgesprochen überraschend angesehen werden, daß die erfindungsgemäßen, niedrigviskosen cycloaliphatischen Polyisocyanate trotz der niedrigeren Funktionalität bei Verwendung bzw. Mitverwendung in Zweikomponenten-Beschichtungssystemen ein gleich gutes Eigenschaftsniveau der daraus hergestellten Beschichtungen ergeben, wie die höherviskosen und höherfunktionellen, Allophanatgruppen-freien Trimerisate cycloaliphatischer Diisocyanate des Standes der Technik.

Gegenstand der Erfindung sind durch Trimerisierung eines Teils der Isocyanatgruppen von cycloaliphatischen Diisocyanaten des Molekulargewichtsbereichs 166 bis 300 oder eines Teils der Isocyanatgruppen von Gemischen von solchen cycloaliphatischen Diisocyanaten mit bis zu 30 Mol-%, bezogen auf die Gesamtmenge der zum Einsatz gelangenden Diisocyanate, an aliphatischen Diisocyanaten des Molekulargewichtsbereichs 140 bis 300 unter vorhergehender, gleichzeitiger und/oder anschließender Umsetzung eines weiteren Teils der Isocyanatgruppen mit einem $C_1$-$C_5$-Alkanol unter Allophanatbildung erhaltene, bei

23 °C feste oder eine Viskosität von über 100 Pa.s aufweisende Lackpolyisocyanate, gekennzeichnet durch einen NCO-Gehalt von 8 bis 20 Gew.-%,
eine mittlere NCO-Funktionalität von unter 3,
einen Gehalt an Isocyanuratgruppen (berechnet als $C_3N_3O_3$, Molekulargewicht = 126) von 3,5 bis 24 Gew.-%,
einen Gehalt an Allophanatgruppen (berechnet als $C_2HN_2O_3$, Molekulargewicht = 101) von 2,5 bis 23 Gew.-%, wobei der Gesamtgehalt an NCO-, Isocyanurat- und Allophanatgruppen bei 28 bis 51 Gew.-% liegt, und
einen Gehalt an monomeren Diisocyanaten der zu ihrer Herstellung verwendeten Art von weniger als 2 Gew.-%.

Gegenstand der Erfindung ist auch die Verwendung dieser Lackpolyisocyanate, gegebenenfalls in mit Blockierungsmitteln für Isocyanatgruppen blockierter Form, als Isocyanatkomponente in Ein- oder Zweikomponenten-Beschichtungssystemen.

Bei den bevorzugten erfindungsgemäßen Lackpolyisocyanaten handelt es sich um solche mit einem NCO-Gehalt von 10 bis 18 Gew.-%, einer mittleren NCO-Funktionalität von 2,2 bis 2,9, einem Gehalt an Isocyanuratgruppen von 7 bis 17 Gew.-%, einem Gehalt an Allophanatgruppen von 5 bis 16 Gew.-% und einem Gehalt an monomeren Diisocyanaten von weniger als 0,5 Gew.-%.

Die Angaben bezüglich der mittleren NCO-Funktionalität beziehen sich auf den aus Molekulargewicht und NCO-Gehalt berechneten Wert, wobei als Molekulargewicht das gelpermeationschromatographisch unter Verwendung von Polystyrol als Standard ermittelte Molekulargewicht Mn in die Berechnung eingeht.

Die erfindungsgemäßen Lackpolyisocyanate besitzen eine sehr gute Löslichkeit und Verdünnbarkeit in für Beschichtungsanwendungen üblichen Lösungsmitteln wie z.B. 1-Methoxy-2-propylacetat (MPA), MPA/Xylol (1:1), Ethylacetat, Butylacetat, in aromatischen Kohlenwasserstoffen, sowie Gemischen derartiger Lösungsmittel.

Ausgangsprodukte für die Herstellung der erfindungsgemäßen Polyisocyanate sind cycloaliphatische Diisocyanate mit einem Molekulargewicht von 166 bis 300, d.h. solche der Formel $R(NCO)_2$, wobei R einen zweiwertigen cycloaliphatischen Kohlenwasserstoffrest des Molekulargewichtsbereichs 82 bis 216 darstellt, und wobei die NCO-Gruppen entweder direkt oder über aliphatische Reste mit einem cycloaliphatischen Ring verknüpft sind. "Cycloaliphatische" Diisocyanate im Sinne der vorliegenden Erfindung sind somit solche, die neben gegebenenfalls vorliegenden nicht-cyclischen aliphatischen Struktureinheiten mindestens einen cycloaliphatischen Ring pro Molekül aufweisen. Beispiele geeigneter Diisocyanate sind Cyclohexan-1,3- und 1,4-diisocyanat, 1,3- und 1,4-Bis(isocyanatomethyl)cyclohexan, 1-Isocyanato-3-isocyanatomethyl-3,5,5-trimethylcyclohexan (Isophorondiisocyanat oder IPDI), Bis-(4-isocyanatocyclohexyl)methan und Bis-(4-isocyanato-3-methylcyclohexyl)methan. Mischungen der Diisocyanate können ebenfalls eingesetzt werden. Bevorzugte Diisocyanate sind Isophorondiisocyanat, 1,3- und 1,4-Bis(isocyanatomethyl)-cyclohexan und Bis(4-isocyanatocyclohexyl)methan. Besonders bevorzugt ist Isophorondiisocyanat. Gemäß einer besonderen, allerdings weniger bevorzugten Ausführungsform werden als Ausgangsmaterialien zur Herstellung der erfindungsgemäßen Lackpolyisocyanate Gemische aus cycloaliphatischen Diisocyanaten der beispielhaft genannten Art mit bis zu 30, vorzugsweise bis zu 10 Mol-%, bezogen auf die Gesamtmenge der zum Einsatz gelangenden Diisocyanate, an aliphatischen Diisocyanaten des Molekulargewichtsbereichs 140 bis 300 eingesetzt. Vorzugsweise werden als Ausgangsdiisocyanate jedoch ausschließlich cycloaliphatische Diisocyanate der beispielhaft genannten Art verwendet. Gegebenenfalls mitzuwendende aliphatische Diisocyanate sind beispielsweise 1,4-Diisocyanatobutan, 1,6-Diisocyanatohexan, 1,12-Diisocyanatododecan und/oder die isomeren Diisocyanato-nonane (Trimethyl-hexamethylendiisocyanat). Zur Herstellung der erfindungsgemäßen Lackpolyisocyanate werden im übrigen vorzugsweise ausschließlich Diisocyanate der beispielhaft genannten Art bzw. deren Gemische eingesetzt. Grundsätzlich möglich, jedoch keineswegs bevorzugt, ist auch die Mitverwendung von bis zu 30 NCO-Äquivalent-% an cycloaliphatischen Mono- oder Triisocyanaten in Abmischung mit den beispielhaft genannten Diisocyanaten.

Weitere Ausgangsverbindungen zur Herstellung der erfindungsgemäßen Lackpolyisocyanate sind $C_1$-$C_5$-Alkanole, vorzugsweise $C_2$-$C_4$-Alkanole, wobei der Begriff "Alkanol" einwertige aliphatische Alkohole, die gegebenenfalls auch Ethersauerstoffatome aufweisen können, umfassen soll. Beispielhaft genannt seien Methanol, Ethanol, n-Propanol, iso-Propanol, n-Butanol, iso-Butanol, tert.-Butanol, 2-Butanol, n-Pentanol, 2-Pentanol, 3-Pentanol, die isomeren Methylbutylalkohole, die isomeren Dimethylpropylalkohole, Neopentylalkohol, Ethoxymethanol, Methoxyethanol. Bevorzugte Alkohole sind Ethanol, n-Propanol, iso-Propanol und die isomeren Butanole. Besonders bevorzugt ist n-Butanol. Beliebige Gemische der beispielhaft genannten Alkanole können ebenfalls eingesetzt werden. Die Alkanole werden bei der Herstellung der erfindungsgemäßen Verbindungen in solchen Mengen eingesetzt, die einem molaren Verhältnis von Alkanol zu Ausgangsdiisocyanat von 0,01:1 bis 0,5:1, vorzugsweise 0,05:1 bis 0,2:1 entsprechen.

Zur Herstellung der erfindungsgemäßen Lackpolyisocyanate wird ein Teil der in den Ausgangsdiisocyanaten vorliegenden Isocyanatgruppen unter Mitverwendung eines geeigneten Katalysators einer an sich bekannten Trimerisierungsreaktion unterworfen. Die Zugabe der beispielhaft genannten Alkanole zum Reaktionsgemisch erfolgt hierbei vor, während und/oder (weniger bevorzugt) im Anschluß an die Trimerisierungsreaktion, so daß ein Teil der Isocyanatgruppen mit dem zugesetzten Alkanol über die entsprechende Urethanstufe unter Allophanatbildung abreagiert.

Geeignete Katalysatoren sollten deshalb in der Lage sein, nicht nur die Trimerisierung, sondern vor allem auch die Allophanatisierung zu katalysieren. Diese Voraussetzung erfüllen praktisch alle an sich bekannten Trimerisierungskatalysatoren des Standes der Technik, die somit ebenfalls bei der Herstellung der erfindungsgemäßen Lackpolyisocyanate Verwendung finden können. Beispiele geeigneter Katalysatoren sind Alkaliphenolate, wie in der GB-PS 1 391 066 oder GB-PS 1 386 399 beschrieben, Aziridin-Derivate in Kombination mit tertiären Aminen der in US-PS 3 919 218 beschriebenen Art, quaternäre Ammoniumcarboxylate gemäß US-PS 4 454 317 und DE-OS 3 810 908, quaternäre Ammoniumphenolate mit einer zwitterionischen Struktur, wie in US-PS 4 335 219 beschrieben, Kombinationen aus Alkylenoxid und N,N'-Endoethylenpiperazin (DABCO) gemäß DE-OS 2 644 684 und US-PS 3 211 703, Ammoniumphosphonate und -phosphate gemäß US-PS 4 499 253, Alkalicarboxylate der in der DE-OS 3 219 608 beschriebenen Art, basische Alkalimetallsalze komplexiert mit acyclischen organischen Verbindungen gemäß US-PS 4 379 905 wie Kaliumacetat komplexiert mit Polyethylenglykol, welches im Mittel 5 bis 8 Ethylenoxideinheiten aufweist, basische Alkalimetallsalze komplexiert mit Kronenethern, wie in US-PS 4 487 928 beschrieben und Mischungen von Alkalimetallfluoriden und quaternären Ammonium- oder Phosphoniumsalzen gemäß EP-B-0 355 479.

Bevorzugte Katalysatoren sind quaternäre Ammoniumhydroxide. Besonders bevorzugt sind solche quaternären Ammoniumhydroxide der allgemeinen Formel

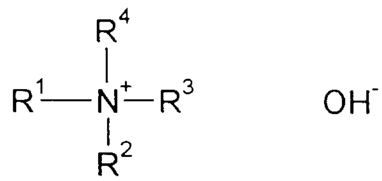

wie sie beispielsweise in der EP-B-00 10 589, EP-B-00 47 452, EP-B-0 330 966, DE-OS 2 806 731 und DE-OS 2 901 479 beschrieben sind, wobei in der genannten Formel

$R^1$ für einen Alkylrest mit 1 bis 20, vorzugsweise 2 bis 12 Kohlenstoffatomen, einen araliphatischen Kohlenwasserstoffrest mit 7 bis 10, vorzugsweise 7 Kohlenstoffatomen oder einen gesättigten cycloaliphatischen Kohlenwasserstoffrest mit 4 bis 10, vorzugsweise 5 bis 6 Kohlenstoffatomen steht, von denen jeder mit Hydroxy- und/oder Hydroxyalkylgruppen mit 1 bis 4 Kohlenstoffatomen substituiert sein kann;

$R^2$, $R^3$ und $R^4$ für gleiche oder verschiedene Reste stehen und, gegebenenfalls Hydroxyl-substituierte Alkylreste mit 1 bis 20, vorzugsweise 1 bis 4 Kohlenstoffatomen bedeuten, wobei zwei der genannten Reste $R^2$, $R^3$ oder $R^4$ auch zusammen mit dem Stickstoffatom gegebenenfalls zusammen mit einem Sauerstoff- oder einem weiteren Stickstoff-Heteroatom einen heterocyclischen Ring mit 3 bis 5 Kohlenstoffatomen bilden können, oder wobei die Reste $R^2$, $R^3$ und $R^4$ jeweils für Ethylenreste stehen, die zusammen mit dem quaternären Stickstoffatom und einem weiteren tertiären Stickstoffatom ein bicyclisches Triethylen-Diamin (DABCO)-Gerüst bilden können.

Ganz besonders bevorzugt erfindungsgemäß einzusetzende quaternäre Ammoniumhydroxide der obengenannten Formel sind solche, in welchen die Reste $R^2$, $R^3$ und $R^4$ jeweils für Alkylreste der genannten Art und $R^1$ für einen Hydroxyethyl-, Hydroxypropyl- oder Hydroxybutylrest, in welchem die Hydroxylgruppen vorzugsweise in 2-Stellung zum quaternären Stickstoff angeordnet ist, oder für einen Benzylrest steht.

Beispiele geeigneter quaternärer Ammoniumhydroxide sind Tetramethyl-, Tetraethyl-, Trimethylstearyl- und Dimethylethylcyclohexyl-ammoniumhydroxid, N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-(2-hydroxybutyl)-ammoniumhydroxid, N,N-Dimethyl-n-dodecyl-N-(2-hydroxyethyl)-ammoniumhydroxid, N-(2-Hydroxyethyl)-N,N-dimethyl-N-(2,2'-dihydroxymethylbutyl)-ammoniumhydroxid, N-Methyl-2-hydroxyethyl-morpholiniumhydroxid, N-Methyl-N-(2-hydroxypropyl)-pyrrolidiniumhydroxid, N-Dodecyl-tris-N-(2-hydroxyethyl)-ammoniumhydroxid, Tetra-(2-hydroxyethyl)-ammoniumhydroxid, die Verbindung der Formel

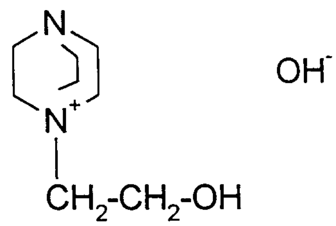

die das Monoaddukt von Ethylenoxid und Wasser an DABCO darstellt, sowie N,N,N-Trimethyl-N-benzylammoniumhydroxid.

Ganz besonders bevorzugte Katalysatoren dieser Gruppe sind N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-N-(2-hydroxybutyl)-ammoniumhydroxid und insbesondere N,N,N-Trimethyl-N-benzylammoniumhydroxid.

Die bevorzugt einzusetzenden quaternären Ammoniumhydroxide gestatten eine lösungsmittelfreie Trimerisierung und Allophanatisierung der erfindungsgemäß einzusetzenden Reaktionsgemische, die in guter Ausbeute unter leicht kontrollierbaren Reaktionsbedingungen zu kaum gefärbten Produkten führt. Zudem sind die verwendeten Katalysatoren thermolabil, so daß bei Überschreitung gewisser Grenztemperaturen eine selbständige Desaktivierung eintritt. Damit kann unter der Maßgabe, daß durch Einhaltung bestimmter nachstehend näher beschriebener Temperaturbedingungen Urethanisierung und Allophanatisierung nahezu vollständig ablaufen, die Trimerisierungsreaktion ohne oder mit nur geringen Mengen eines Abstoppers nach dem Stand der Technik beendet werden, was den Vorteil hat, daß im Verfahrensprodukt keine Trübungen auftreten.

Die Katalysatoren werden im allgemeinen in Mengen von 0,0005 bis 5, vorzugsweise 0,001 bis 2 Gew.-%, bezogen auf Diisocyanat, eingesetzt. Bei Verwendung der bevorzugten quaternären Ammoniumhydroxide als Katalysatoren werden diese im allgemeinen in einer Menge von 0,0005 bis 2, vorzugsweise 0,001 bis 0,2 Gew.-%, bezogen auf eingesetztes Diisocyanat, eingesetzt.

Bei Verwendung von quaternären Ammoniumhydroxiden als Katalysatoren werden diese vorzugsweise in in geeigneten Lösungsmitteln gelöster Form eingesetzt. Als Lösungsmittel eignen sich beispielsweise Toluol, Dimethylformamid, Dimethylsulfoxid oder auch Mischungen davon, die in Mengen von maximal 5 Gew.-%, bezogen auf eingesetztes Isocyanat, eingesetzt werden, und im Anschluß an die Umsetzung, gegebenenfalls zusammen mit überschüssigem Diisocyanat, destillativ entfernt werden.

Erfindungsgemäß bevorzugt sind jedoch Lösungsmittel mit reaktiven Wasserstoffatomen, speziell Alkoholen wie Methanol, Ethanol, Propanol, Butanole, Pentanole, die beim Eintragen in das zu trimerisierende Diisocyanat zu Carbamidsäurederivaten abreagieren können und im Produkt verbleiben. Als Katalysatorlösungsmittel geeignet, jedoch weniger bevorzugt sind auch Diole wie z.B. 1,3-Butandiol oder 2-Ethyl-1,3-hexandiol.

Besonders bevorzugt ist es, die zuvorgenannten zum Einbau von Allophanatgruppen verwendeten Monoalkohole mit 1 bis 5 C-Atomen auch als Katalysatorlösungsmittel zu verwenden.

Die Mitverwendung größerer Mengen an Lösungsmitteln, die im Anschluß an die Umsetzung destillativ entfernt werden können, ist erfindungsgemäß weniger bevorzugt.

Die Mitverwendung von Cokatalysatoren ist möglich aber nicht notwendig. Alle Substanzen, von denen ein polymerisierender Effekt auf Isocyanate bekannt ist, sind geeignet als Cokatalysatoren, wie beispielsweise die in der DE-OS 2 806 731 beschriebenen. Die Cokatalysatoren, sofern es sich nicht um die gleichzeitig als Katalysatorlösungsmittel verwendeten Alkohole handelt, werden gegebenenfalls in einer im Vergleich zu den Katalysatoren geringeren Menge mitverwendet.

Die Reaktionstemperatur liegt sowohl bezüglich der Isocyanurat- als auch bezüglich der Allophanatbildung im allgemeinen bei 40 bis 200 °C, vorzugsweise 60 bis 150 °C und besonders bevorzugt 90 bis 130 °C.

Die zu den erfindungsgemäßen Lackpolyisocyanten führende Umsetzung kann kontinuierlich oder diskontinuierlich, lösungsmittelfrei oder in Gegenwart von Lösungsmitteln durchgeführt werden, wobei als Lösungsmittel inerte Lacklösungsmittel wie beispielsweise Toluol, Butylacetat, Diisopropylether, Cyclohexan oder Gemische derartiger Lösungsmittel in Betracht kommen. Die Zugabe des Alkanols (Monoalkohols) kann auf unterschiedliche Art erfolgen. Man kann beispielsweise den Monoalkohol mit dem Diisocyanat unter Bildung von Urethangruppen abreagieren lassen, bevor das urethanisierte Diisocyanat dem Reaktionsgefäß zugeführt wird; der Monoalkohol kann mit dem Diisocyanat gemischt werden und dem Reaktionsgefäß zugeführt werden; der Monoalkohol kann separat dem Reaktionsgefäß zugeführt werden, bevor oder

nachdem, vorzugsweise nachdem das Diisocyanat in das Reaktionsgefäß gegeben wurde; man kann auch den Katalysator im Monoalkohol lösen, bevor diese Lösung dem Reaktionsgefäß zugeführt wird. Der Katalysator kann auch separat der Reaktionsmischung aus Diisocyanat und Monoalkohol vor, nach oder während der Urethanisierung, die im angegebenen Temperaturbereich katalysatorfrei, aber auch in Gegenwart des Katalysators rasch vervollständigt wird, zugegeben werden.

Wie bereits angedeutet, werden Trimerisierung und Allophanatisierung vorzugsweise gleichzeitig durchgeführt. Bei einer Temperatur von etwa 60 °C setzen beide Reaktionen in Gegenwart von Katalysatoren der beispielhaft genannten Art ein, was sich durch Auftreten einer Exothermie bemerkbar macht. Mit steigender Reaktionstemperatur wächst die Geschwindigkeit der Umwandlung von Urethangruppen in Allophanatgruppen schneller als die Trimerisierungsgeschwindigkeit.Bei Temperaturen ab etwa 90 °C ist die Allophanatisierung sehr schnell gegenüber der Trimerisierung, so daß, wenn der gewünschte Trimerisierungsgrad erreicht ist, die Urethangruppen im allgemeinen vollständig in Allophanatgruppen umgewandelt sind. Wird die Reaktion unterhalb 90 °C durchgeführt, so verbleiben nicht umgesetzte Urethangruppen im Produkt, und bei gleichem Umsetzungsgrad der NCO-Gruppen wird der Trimerisierungsgrad relativ höher sein, was zu einer relativ höheren Viskosität der Endprodukte führt.

Der Fortgang der Reaktion wird durch Bestimmung des NCO-Gehaltes durch eine geeignete Methode wie Titration, refraktometrische Messungen oder IR-Spektroskopie verfolgt.

Schließlich kann die Reaktion beim gewünschten Trimerisierungsgrad beendet werden, was im allgemeinen bei einem NCO-Gehalt von 10 bis 43, vorzugsweise 14 bis 34 Gew.-% des Reaktionsgemischs der Fall ist, wobei sich diese Prozentangaben auf das lösungsmittelfreie Reaktionsgemisch beziehen.

Die Beendigung der Trimerisierungsreaktion kann z.B. durch Zugabe eines Katalysatorgiftes, wie in obengenannten Anmeldungen beschrieben, erreicht werden. Beispielsweise bei Verwendung basischer Katalysatoren kann die Reaktion durch Zugabe eines Säurechlorids wie Benzoylchlorid in einer der Katalysatormenge mindestens äquivalenten Menge beendet werden. Bei der Verwendung thermolabiler Katalysatoren wie den vorzugsweise zu verwendenden quaternären Ammoniumhydroxiden kann auf die Zugabe eines Katalysatorgiftes zur Beendigung der Trimerisierung auch ganz verzichtet werden, da sich diese Katalysatoren im Lauf der Reaktion zersetzen. Es ist deshalb bevorzugt, diese thermolabilen Katalysatoren portionsweise der Reaktionsmischung zuzusetzen, um so den gewünschten NCO-Gehalt allmählich und kontrollierbar zu erreichen, so daß die Beendigung der Trimerisierungsreaktion durch Beendigung der Katalysatorzugabe und gegebenenfalls Zugabe einer Menge an Katalysatorgift wie beispielsweise Benzoylchlorid oder Dibutylphosphat, die deutlich geringer als die der Katalysatormenge äquivalente Menge ist, erreicht werden kann. Es ist auch möglich, suspendierte feste Katalysatoren zu verwenden, die nach Erreichen des gewünschten Trimerisierungsgrades von der Reaktionsmischung abfiltriert werden.

Zur Aufarbeitung der Reaktionsansätze wird, gegebenenfalls nach Abtrennung unlöslicher Katalysator-Bestandteile, nicht umgesetztes monomeres Diisocyanat sowie gegebenenfalls mitverwendetes Lösungsmittel aus dem Umsetzungsprodukt durch an sich bekannte Methoden wie beispielsweise Dünnschichtdestillation weitgehend entfernt, wobei sicherzustellen ist, daß die resultierenden erfindungsgemäßen Lackpolyisocyanate einen Gehalt an monomerem Diisocyanat von weniger als 2, vorzugsweise weniger als 0,5 Gew.-% aufweisen.

Die bereits obengenannten Kenndaten der erfindungsgemäßen Lackpolyisocyanate werden durch geeignete Auswahl der Mengenverhältnisse der Ausgangskomponenten und den Trimerisierungsgrad sichergestellt.

Die erfindungsgemäßen Lackpolyisocyanate stellen bei 23 °C Festkörper oder viskose Flüssigkeiten mit einer über 100 Pa.s liegenden Viskosität dar, die zur besseren Handhabung vorzugsweise in üblichen Lacklösungsmitteln der bereits oben beispielhaft genannten Art gelöst werden. Falls es sich bei den erfindungsgemäßen Lackpolyisocyanaten um Festkörper handelt, können diese jedoch auch lösungsmittelfrei, vorzugsweise in blockierter Form als Pulverlack-Vernetzer Verwendung finden.

Alle hier, vor- und nachstehend gemachten Angaben bezüglich der Viskosität beziehen sich auf die rotationsviskosimetrisch gemäß DIN 53 019 unter Verwendung eines HAAKE-VISKOTESTERS 500 ermittelten Werte.

Die erfindungsgemäßen Lackpolyisocyanate stellen wertvolle Ausgangsmaterialien zur Herstellung von Ein- oder Zweikomponenten-Beschichtungssystemen dar. Vorzugsweise werden die erfindungsgemäßen Lackpolyisocyanate in unblockierter Form als Polyisocyanat-Komponente in lösungsmittelarmen Polyurethanlacken, insbesondere zur Autoreparaturlackierung eingesetzt. In mit Blockierungsmitteln blockierter Form können die erfindungsgemäßen Lackpolyisocyanate auch als Härter für einkomponentig zu verarbeitende Einbrennlacke Verwendung finden.

Bevorzugte Reaktionspartner für die erfindungsgemäßen, gegebenenfalls in blockierter Form vorliegenden Lackpolyisocyanate bei der erfindungsgemäßen Verwendung sind insbesondere die aus der Polyurethanlacktechnologie an sich bekannten Polyhydroxylverbindungen wie beispielsweise Polyhydroxypolyether und insbesondere Polyhydroxypolyester und/oder Polyhydroxypolyacrylate, gegebenenfalls in Abmischung mit niedermolekularen, mehrwertigen Alkoholen.

Auch Polyamine, insbesondere in blockierter Form (Polyketimine oder Oxazolidine) stellen denkbare Reaktionspartner für die erfindungsgemäßen Lackpolyisocyanate bei der erfindungsgemäßen Verwendung dar. Eine besonders interessante Klasse von denkbaren Reaktionspartnern für die erfindungsgemäßen Lackpolyisocyanate bei der erfindungsgemäßen Verwendung sind die sekundäre Aminogruppen aufweisenden "Polyasparaginsäureester" gemäß EP-A-0 403 921, die oftmals in Kombination mit Polyhydroxypolyestern und insbesondere Polyhydroxypolyacrylaten der aus der Lacktechnologie an sich bekannten Art Verwendung finden.

Bei allen Varianten der erfindungsgemäßen Verwendung werden die Mengenverhältnisse der Bindemittelkomponenten im allgemeinen so gewählt, daß auf jede, gegebenenfalls blockierte Isocyanatgruppe der erfindungsgemäßen Lackpolyisocyanate 0,7 bis 3,0, vorzugsweise 0,8 bis 1,1 gegebenenfalls blockierte isocyanatreaktive Gruppen entfallen.

Zur Beschleunigung der Aushärtung können in bekannter Weise die in der Isocyanatchemie üblichen Katalysatoren verwendet werden, wie z.B. tert. Amine wie Triethylamin, Pyridin, Methylpyridin, Benzyldimethylamin, N,N-Dimethylaminocyclohexan, N-Methylpiperidin, Pentamethyldiethylentriamin, 1,4-Diazabicyclo-(2,2,2)octan und N,N'-Dimethylpiperazin oder Metallsalze wie Eisen(III)chlorid, Zinkchlorid, Zink-2-ethylcaproat, Zinn(II)-ethylcaproat, Dibutylzinndilaurat und Molybdänglykolat.

Geeignete Blockierungsmittel zur gegebenenfalls erforderlichen Blockierung der Lackpolyisocyanate sind beispielsweise Monophenole (Phenol, Kresol), tertiäre Alkohole (t.-Butanol, Dimethylphenylcarbinol), leicht Enole bildende Verbindungen (Acetessigsäureethylester, Malonsäurediethylester), sekundäre Amine (Diisopropylamin, N-Methylanilin, N-Phenylxylidin), Imide (Succinimid), Lactame ($\epsilon$-Caprolactam, $\delta$-Valerolactam), Oxime (Butanonoxim, Cyclohexanonoxim), Mercaptane (Methylmercaptan, Ethylmercaptan), Triazole (1H-1,2,4-Triazol) oder auch Gemische derartiger Blockierungsmittel.

Die Herstellung der gebrauchsfertigen Beschichtungsmittel erfolgt in an sich bekannter Art, gegebenenfalls unter Mitverwendung der aus der Lacktechnologie üblichen Hilfs- und Zusatzstoffe wie z.B. Pigmenten, Farb- und Füllstoffen, Verlaufhilfsmittel u.dgl. Die besonders bevorzugten erfindungsgemäßen Zweikomponenten-Polyurethanlacke weisen im allgemeinen einen Gehalt an inerten Lösungsmitteln von 20 bis 80, vorzugsweise 30 bis 50 Gew.-% auf. Die erfindungsgemäßen Lackpolyisocyanate können jedoch auch, falls es sich um Festkörper handelt, als Pulverlackvernetzer Verwendung finden, wozu sie jedoch vorzugsweise in mit Blockierungsmitteln der beispielhaft genannten Art blockierter Form Verwendung finden. Die erfindungsgemäßen Lackpolyisocyanate eignen sich auch zur Herstellung von einkomponentig zu verarbeitenden, lufttrocknenden Lacken. Hierzu werden aus aus der Lacktechnologie an sich bekannten Polyhydroxylverbindungen der beispielhaft genannten Art und überschüssigen Mengen der erfindungsgemäßen Lackpolyisocyanate NCO-Prepolymere hergestellt, die, vorzugsweise in in Lacklösungsmitteln gelöster Form, unter dem Einfluß von Luftfeuchtigkeit aushärtbare Einkomponenten-Bindemittel darstellen.

Die mit den erfindungsgemäßen Lackpolyisocyanaten hergestellten Beschichtungsmittel können in Abhängigkeit von ihrer Konsistenz aus Lösung, aus der Schmelze oder in fester Form nach den üblichen Methoden wie z.B. Streichen, Rollen, Gießen, Spritzen, dem Wirbelsinterverfahren oder dem elektrostatischen Pulversprühverfahren auf den zu beschichtenden Gegenstand aufgebracht werden.

Die die erfindungsgemäßen Lackpolyisocyanate enthaltenden Beschichtungssysteme ergeben Filme, die überraschend gut auf metallischem Untergrund haften, besonders lichtecht, wärmefarbstabil und sehr abriebfest sind und, sofern sie in lufttrocknenden Lacken verwendet werden, besonders rasch, selbst bei Temperaturen um 0 °C antrocknen. Darüber hinaus zeichnen sie sich durch große Härte, Elastizität, sehr gute Chemikalienbeständigkeit, insbesondere Superbenzinfestigkeit, hohen Glanz, ausgezeichnete Wetterbeständigkeit und Pigmentierbarkeit aus.

Die folgenden Beispiele erläutern die Erfindung. Alle Prozentangaben betreffen Gewichtsprozente.

## Beispiele

### Beispiel 1

In einem 2 l-Dreihalskolben mit Rührer, Gaseinleitungsrohr, Innenthermometer und Rückflußkühler werden unter Stickstoff 1110 g Isophorondiisocyanat (IPDI) mit 37 g n-Butanol versetzt und 1 h bei 90 °C gerührt. Nach Beendigung der Urethanisierung versetzt man bei 90 °C mit 3,8 g (200 ppm molar) einer 4,4

%igen Lösung von N,N,N-Trimethyl-N-benzylammoniumhydroxid in n-Butanol. Wenn die Reaktionsmischung einen NCO-Gehalt ($NCO_E$) von 29,4 % erreicht hat, stoppt man durch Zugabe von 0,3 g (70 ppm molar) einer 25%igen Lösung von Dibutylphosphat in IPDI ab. Überschüssiges monomeres IPDI wird durch Dünnschichtdestillation entfernt. Man erhält ein nahezu farbloses, klares Festharz mit einem NCO-Gehalt von 14,6 % und einem Gehalt an freiem monomerem IPDI von 0,32 %. Die Ausbeute beträgt 32,1 %. Der Gehalt an Isocyanuratgruppen (MG = 126) beträgt 10 %, der Gehalt an Allophanatgruppen (MG = 101) 12 %. Aus dem NCO-Gehalt und dem gelpermeationschromatographisch ermittelten Molekulargewicht läßt sich eine mittlere Funktionalität von ca. 2,5 errechnen. Man stellt eine 70 %ige Lösung des erhaltenen Festharzes in 1-Methoxy-2-propylacetat (MPA) her, die eine Viskosität von 320 mPa.s (23 °C) und einen NCO-Gehalt von 10,2 % aufweist.

**Beispiel 2 - 12**

Durchführung analog Beispiel 1. Einzelheiten sind Tabelle 1 zu entnehmen.

**Tabelle 1**

| Beispiel | 2 | 3 | 4 | 5 | 6 | 7 | 8 | 9 | 10 | 11 | 12 |
|---|---|---|---|---|---|---|---|---|---|---|---|
| Isocyanat | IPDI | IPDI | IPDI | IPDI | IPDI | IPDI | IPDI | IPDI | IPDI | IPDI | IPDI |
| (%) | 96,8 | 96,8 | 96,8 | 96,8 | 96,8 | 98,4 | 95,2 | 98,6 | 98,0 | 96,8 | 96,2 |
| Alkohol | n-BuOH | n-BuOH | n-BuOH | n-BuOH | n-BuOH | n-BuOH | n-BuOH | MeOH | EtOH | 2-BuOH | 1-Pentanol |
| (%) | 3,2 | 3,2 | 3,2 | 3,2 | 3,2 | 1,6 | 4,8 | 1,4 | 2,0 | 3,2 | 3,8 |
| Rktstemp. (°C) | 60 | 90 | 90 | 90 | 90 | 90 | 90 | 90 | 90 | 90 | 90 |
| Kat.menge (ppm molar) | 200 | 300 | 250 | 220 | 150 | 200 | 200 | 200 | 200 | 200 | 200 |
| $NCO_E$ (%) | 29,5 | 24,1 | 26,7 | 28,5 | 31,0 | 29,9 | 26,3 | 31,0 | 29,4 | 28,5 | 29,1 |
| NCO-Gehalt | 14,7 | 14,3 | 14,3 | 14,7 | 15,3 | 14,9 | 14,2 | 16,3 | 14,7 | 14,3 | 14,1 |
| freies IPDI (%) | 0,26 | 0,35 | 0,30 | 0,28 | 0,23 | 0,33 | 0,21 | 0,21 | 0,33 | 0,35 | 0,27 |
| Ausbeute (%) | 32,0 | 54,3 | 42,4 | 37,4 | 28,0 | 34,9 | 46,9 | 27,5 | 36,3 | 37,5 | 35,6 |
| Isocyanurat (%) | 11 | 15 | 13 | 11 | 7 | 16 | 9 | 8 | 11 | 11 | 10 |
| Allophanat (%) | 8 | 7 | 9 | 11 | 14 | 6 | 13 | 14 | 12 | 11 | 12 |
| mittl. Funk. | 2,5 | 2,8 | 2,7 | 2,6 | 2,3 | 2,9 | 2,4 | 2,4 | 2,5 | 2,6 | 2,5 |
| Viskosität* (mPa.s) | 580 | 1000 | 650 | 420 | 150 | 1250 | 240 | 550 | 600 | 460 | 290 |

*Viskosität der 70 %igen Lösung in MPA

**Verwendungsbeispiele:**

Als Verwendungsbeispiele wurden Zweikomponenten-Klarlacke, bestehend aus einer Polyolkomponente, Polyisocyanaten sowie üblichen Hilfs- und Zusatzstoffen, formuliert.

Als Polyolkomponente wurde dazu ein Polyhydroxypolyacrylat, das als 70 %ige Lösung in Butylacetat vorlag, eingesetzt. Das Polyacrylatpolyol weist eine OH-Zahl von 140 auf und wurde durch Copolymerisation von Styrol, Hydroxyethylmethacrylat, Butylacrylat und Acrylsäure im Gewichtsverhältnis der Monomeren 40:34:25:1hergestellt. Die Visikosität der 70 %igen Lösung bei 23 ° C lag bei 4 000 mPa.s.

Als Polyisocyanatkomponenten wurden das erfindungsgemäße Polyisocyanat aus Beispiel 1 sowie drei bekannte Polyisocyanate als Vergleich eingesetzt.

**Polyisocyanat 1** (erfindungsgemäß vgl. Beispiel 1) weist folgende Kenndaten auf:

| | |
|---|---|
| Viskosität (23 ° C)* | 320 mPa.s |
| NCO-Gehalt* | 10,2 % |
| mittlere Funktionalität (laut GPC) | 2,5 |

* = Daten der 70 %igen Lösung in MPA (Methoxypropylacetat)

Als **Polyisocyanat 2** (Vergleich) wurde ein IPDI-Trimerisat, hergestellt gemäß EP-B-00 37 65, mit folgenden Kenndaten eingesetzt:

| | |
|---|---|
| Viskosität (23 ° C)* | 2000 mPa.s |
| NCO-Gehalt* | 11,5 % |
| mittlere Funktionalität (laut GPC) | 3,3 |

* = Daten der 70 %igen Lösung in MPA

Als **Polyisocyanat 3** (Vergleich) wurde ein HDI-Isocyanurat/Allophanat-Polyisocyanat, hergestellt gemäß EP-A-0 496 208, mit folgenden Kenndaten eingesetzt:

| | |
|---|---|
| Viskosität (23 ° C) | 300 mPa.s |
| NCO-Gehalt | 20,0 % |
| mittlere Funktionalität (laut GPC) | 2,5 |

Als **Polyisocyanat 4** wurde ein HDI-Trimerisat, hergestellt gemäß EP-B-0 330 966, mit folgenden Kenndaten eingesetzt:

| | |
|---|---|
| Viskosität (23 ° C) | 1000 mPa.s |
| NCO-Gehalt | 23,0 % |
| mittlere Funktionalität (laut GPC) | 3,3 |

Mit diesen Polyisocyanaten und dem Polyol wurden Zweikomponenten-Klarlacke mit einem Festkörpergehalt von 50 % formuliert. Dabei wurde ein Verhältnis von Isocyanatgruppen zu Hydroxylgruppen von NCO/OH = 1,0 gewählt.

Zuvor wurden dem Polyol die in Tabelle 2 aufgeführten Hilfs- und Zusatzstoffe beigemischt.

Tabelle 2

| Formulierung der Polyolkomponente | |
|---|---|
| Komponente | Gewichtsteile (g) |
| Polyacrylatpolyol (70 %ig) | 142,9 |
| ®Byk 331[1] (50 %ig) | 0,9 |
| ®Tinuvin 1130[2] (50 %ig) | 5,8 |
| ®Tinuvin 292[3] (50 %ig) | 2,9 |
| Dabco LV-33[4] (10 %ig) | 2,9 bzw. 7,9[5] |
| MPA/Xylol/Butylacetat (1:1:1) | bis auf 50 % Festkörpergehalt des 2K-Systems |

1 = Verlaufhilfsmittel der Fa. Byk
2 = UV-Absorptionsmittel der Fa. Ciba-Geigy
3 = Lichtstabilisator der Fa. Ciba-Geigy
4 = Katalysator der Fa. Air Products
5 = Mengen für HDI- bzw. IPDI-Polyisocyanate

Es wurden folgende Systeme auf ihre lacktechnologischen Eigenschaften hin untersucht:

Tabelle 3

| System | Polyol | Polyisocyanat |
|---|---|---|
| A (erfindungsgemäß) | Polyacrylatpolyol | 1 |
| B (Vergleichsbeispiel) | Polyacrylatpolyol | 2 |
| C (erfindungsgemäß) | Polyacrylatpolyol | 1 + 4 (2:1)* |
| D (Vergleichsbeispiel) | Polyacrylatpolyol | 2 + 4 (2:1)* |
| E (Vergleichsbeispiel) | Polyacrylatpolyol | 3 |
| F (Vergleichsbeispiel) | Polyacrylatpolyol | 4 |

* = Gewichtsteile

Die Ergebnisse der lacktechnischen Untersuchungen werden zusammengefaßt in Tabelle 4.

Tabelle 4

| lacktechnische Eigenschaften | | | Systeme | | | | | |
|---|---|---|---|---|---|---|---|---|
| | | | A | B | C | D | E | F |
| Auslaufzeiten DIN 4 | 0 h | (s) | 17 | 20 | 17 | 19 | 16 | 17 |
| | 1 h | | 18 | 21 | 19 | 21 | 17 | 19 |
| | 2 h | | 19 | 22 | 20 | 23 | 18 | 20 |
| | 3 h | | 19 | 24 | 21 | 25 | 19 | 21 |
| | 4 h | | 20 | 26 | 23 | 28 | 20 | 23 |
| | 6 h | | 21 | 28 | 29 | 35 | 21 | 25 |
| Trocknung | Sandtrock. | (h) | 1,0 | 1,0 | 1,0 | 1,0 | 4,5 | 2,5 |
| | Klebfrei | (h) | 4,5-5 | 4,5-5 | 5,0 | 5,0 | >10 | 8-10 |
| | 60'60 °C | 0-5[a] | 0 | 0 | 0 | 0 | 3 | 0 |
| Pendelhärte | 1d 23 °C | (s) | 97 | 108 | 105 | 104 | 32 | 67 |
| | 4d 23 °C | (s) | 162 | 161 | 144 | 148 | 100 | 129 |
| | 7d 23 °C | (s) | 175 | 172 | 153 | 154 | 110 | 150 |
| Trockenfilmstärke | | (µm) | 50 | 55 | 45 | 50 | 45 | 50 |
| Pendelhärte 60'60 °C | +2h 23 °C | (s) | 125 | 127 | 132 | 122 | klebt | 14 |
| | +1d 23 °C | (s) | 171 | 165 | 172 | 168 | 42 | 108 |
| | +4d 23 °C | (s) | 198 | 180 | 187 | 179 | 102 | 156 |
| | +7d 23 °C | (s) | 199 | 186 | 190 | 180 | 114 | 170 |
| Trockenfilmstärke | | (µm) | 40 | 50 | 45 | 45 | 45 | 50 |
| Superbenzinfestigkeit[b] 60'60 °C | +2h 23 °C 1'/5' | | 2/4 | 2/4 | 0/0 | 0/0 | 3/5 | 1/2 |
| | +1d 23 °C | 1'/5' | 1/2 | 1/2 | 0/0 | 0/0 | 2/3 | 0/1 |
| | +4d 23 °C | 1'/5' | 0/1 | 0/1 | 0/0 | 0/0 | 1/1 | 0/0 |
| | +7d 23 °C | 1'/5' | 0/0 | 0/0 | 0/0 | 0/0 | 0/0 | 0/0 |

a: 0 = durchgehärtet, 5 = klebrig
b: 0 = Film unverändert, 5 = stark angelöst

Ergebnis:

Bei den in den Systemen E und F eingesetzten HDI-Polyisocyanaten ist festzustellen, daß beim Übergang vom höherviskosen Polyisocyanat 4 mit Funktionalität 3,3 (System F) zum niedriger viskosen Polyisocyanat 3 mit Funktionalität 2,5 (System E) eine Verschlechterung der lacktechnischen Eigenschaften wie Trocknung, Pendelhärte und Superbenzinfestigkeit zu beobachten ist.

Bei der Verwendung bzw. Mitverwendung von IPDI-Polyisocyanaten (Systeme A und B, bzw. C und D) ist eine Verbesserung der Trocknung sowie der Pendelhärte, vor allem der Anfangspendelhärte der Filme festzustellen.

Beim Übergang vom höherviskosen Polyisocyanat 2 mit Funktionalität 3,3 (System B bzw. D) zum niedriger viskosen erfindungsgemäßen Polyisocyanat 1 mit Funktionalität 2,5 (System A bzw. C) werden gleich gute lacktechnische Eigenschaften wie Trocknung, Pendelhärte und Superbenzinfestigkeit festgestellt.

Mit den erfindungsgemäßen Polyisocyanaten wird es somit möglich, hochwertige Lacke unter Verwendung bzw. Mitverwendung von cycloaliphatischen Polyisocyanaten mit höheren Festkörpergehalten und

längeren Verarbeitungszeiten als mit Systemen des Standes der Technik zu formulieren, ohne daß sich dabei die lacktechnischen Eigenschaften daraus hergestellter Beschichtungen verschlechtern.

## Patentansprüche

1. Durch Trimerisierung eines Teils der Isocyanatgruppen von cycloaliphatischen Diisocyanaten des Molekulargewichtsbereichs 166 bis 300 oder eines Teils der Isocyanatgruppen von Gemischen von solchen cycloaliphatischen Diisocyanaten mit bis zu 30 Mol-%, bezogen auf die Gesamtmenge der zum Einsatz gelangenden Diisocyanaten, an aliphatischen Diisocyanaten des Molekulargewichtsbereichs 140 bis 300 unter vorhergehender, gleichzeitiger und/oder anschließender Umsetzung eines weiteren Teils der Isocyanatgruppen mit einem $C_1$-$C_5$-Alkanol unter Allophanatbildung erhaltene, bei 23 °C feste oder eine Viskosität von über 100 Pa.s aufweisende Lackpolyisocyanate, gekennzeichnet durch
   einen NCO-Gehalt von 8 bis 20 Gew.-%,
   eine mittlere NCO-Funktionalität von unter 3,
   einen Gehalt an Isocyanuratgruppen (berechnet als $C_3N_3O_3$, Molekulargewicht = 126) von 3,5 bis 24 Gew.-%,
   einen Gehalt an Allophanatgruppen (berechnet als $C_2HN_2O_3$, Molekulargewicht = 101) von 2,5 bis 23 Gew.-%, wobei der Gesamtgehalt an NCO-, Isocyanurat und Allophanatgruppen bei 28 bis 51 Gew.-% liegt, und
   einen Gehalt an monomerem Diisocyanaten von weniger als 2 Gew.-%.

2. Lackpolyisocyanate gemäß Anspruch 1, gekennzeichnet durch
   einen NCO-Gehalt von 10 bis 18 Gew.-%,
   eine mittlere NCO-Funktionalität von 2,2 bis 2,9,
   einen Gehalt an Isocyanuratgruppen von 7 bis 17 Gew.-%,
   einen Gehalt an Allophanatgruppen von 5 bis 16 Gew.-% und einen Gehalt an monomeren Diisocyanaten von weniger als 0,5 Gew.-%.

3. Lackpolyisocyanate gemäß Anspruch 1 und 2, dadurch gekennzeichnet, daß sie Derivate von 1-Isocyanato-3,3,5-trimethyl-5-isocyanatomethyl-cyclohexan darstellen.

4. Verwendung der Lackpolyisocyanate gemäß Anspruch 1 bis 3, gegebenenfalls in mit Blockierungsmitteln für Isocyanatgruppen blockierter Form, als Isocyanatkomponente in Ein- oder Zweikomponenten-Beschichtungssystemen.

5. Verwendung der Lackpolyisocyanate in unblockierter Form gemäß Anspruch 4 in Zweikomponenten-Polyurethanlacken.

6. Verwendung der Lackpolyisocyanate gemäß Anspruch 4 in Zweikomponenten-Autoreparaturlacken.

Europäisches Patentamt

# EUROPÄISCHER RECHERCHENBERICHT

Nummer der Anmeldung
EP 94 11 5854

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | US-A-5 258 482 (JACOBS ET AL) * Spalte 2, Zeile 49 - Spalte 8, Zeile 2; Ansprüche 1-13 * --- | 1 | C08G18/79 C08G18/78 |
| P,X | EP-A-0 566 037 (TAKEDA) * Ansprüche * --- | 1 | |
| P,X | US-A-5 290 902 (JACOBS ET AL) * Spalte 2, Zeile 50 - Spalte 8, Zeile 7; Ansprüche 1-13 * --- | 1 | |
| D,Y | EP-A-0 496 208 (MILES) * Seite 3, Zeile 10 - Seite 6, Zeile 16; Ansprüche 1-9 * --- | 1 | |
| D,Y | EP-A-0 524 501 (MILES) * Seite 2, Zeile 56 - Seite 6, Zeile 20; Ansprüche 1,2 * ----- | 1 | |
| | | | RECHERCHIERTE SACHGEBIETE (Int.Cl.6) |
| | | | C08G |

Der vorliegende Recherchenbericht wurde für alle Patentansprüche erstellt

| Recherchenort | Abschlußdatum der Recherche | Prüfer |
|---|---|---|
| DEN HAAG | 21. Dezember 1994 | Bourgonje, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)